# EUROPEAN PATENT APPLICATION

(11) **EP 2 111 026 A1**
(43) Date of publication of application: **21.10.2009**
(21) Application number: 08159013.5
(22) Date of filing: 25.06.2008
(51) Int. Cl.: H04M 3/42, H04M 7/00, H04L 29/06

(54) **Accessing communication features**

(30) Priority: 18.04.2008 US 148317
(71) Applicant: Mitel Networks Corporation, Ottawa, ON K2K 2W7 (CA)
(72) Inventor: Lord, John, Stittsvill Ontario K2S 1H6 (CA)
(74) Representative: Derry, Paul Stefan

(57) **Abstract**

A method and apparatus for accessing communication features in a communication session between at least two communication devices is provided. A first communication path is established between the at least two communication devices via a first communication protocol, the first communication protocol associated with a first set of communication features. A second communication path is established between the at least two communication devices via a second communication protocol, the second communication protocol associated with a second set of communication features thereby giving at least one of the at least two communication devices access to the second set of communication features.

## Description

The specification relates generally to communication systems, and specifically to a method, system and apparatus for accessing communication features in a communication session between at least two communication devices.

Only a small subset of standard Call Control Features are supported in Open Architecture SIP call servers that use SIP endpoints (e.g. a SIP Phone) as the communication device. Supported SIP call control features are generally limited to basic call, hold, transfer, basic conference, and call forwarding. Basic conference includes setting up a conference call and tearing down a conference call but does not include advanced features like conference hold, split and swap. Additional call features like key line appearances, multi-line appearances and pickup groups, etc., are not supported.

SIP endpoint call control features available when communicating with a PBX based Phone System (e.g. via the PSTN or an IP Phone), including making and receiving calls, are limited by the SIP protocol and the SIP interface offered by the PBX. This limitation also applies to 'software-only PBX systems' on standard server /workstation hardware. Again, SIP call control features on a PBX are typically limited to basic call, hold, transfer, basic conference, and call forwarding.

While it may be possible to add additional SIP endpoint call control features by changing the existing Open Architecture SIP Call Server and/or an existing PBX based Phone System, and/or the SIP protocol, such changes would require either fundamental modifications to existing protocols or unwieldy changes to existing servers and/or systems.

A first aspect of the specification provides a method of accessing communication features in a communication session between at least two communication devices. The method may comprise establishing a first communication path between the at least two communication devices via a first communication protocol, the first communication protocol associated with a first set of communication features. The method further may comprise establishing a second communication path between the at least two communication devices via a second communication protocol, the second communication protocol associated with a second set of communication features thereby giving at least one of the at least two communication devices access to the second set of communication features. The method may further comprise disconnecting the first communication path once the second communication path is established. The first communication path may be placed in a hold state prior to establishing the second communication path. The first communication protocol may comprise a SIP protocol. The second communication protocol may comprise a PBX based protocol. The PBX based protocol may comprise an IP based protocol.

Each of the communication devices may comprise a SIP endpoint and a PBX based endpoint. Establishing the first communication path may occur via at least one of the SIP endpoints and establishing the second communication path may occur via at least one of the PBX based endpoints.

The communication device further may comprise an integration module, the integration module enabled for triggering establishing the second communication path. The integration module may be enabled to receive input data indicative that access to the second set of communication features is desired, the triggering occurring upon receipt of the input data.

The second set of communication features may be larger than the first set of communication features.

Each of the at least two communication devices may be given access to the second set of communication features upon establishing the second communication path.

A second aspect of the specification provides a communication device comprising: a first communication endpoint enabled for establishing a first communication path between the communication device and at least one other communication device via a first communication protocol, the first communication protocol associated with a first set of communication features; and a second communication endpoint enabled for establishing a second communication path between the communication device and the at least one other communication device via a second communication protocol, the second communication protocol associated with a second set of communication features thereby giving at least the communication device access to the second set of communication features. The first communication endpoint may also be enabled for disconnecting the first communication path once the second communication path is established. The first communication path may be placed in a hold state prior to establishing the second communication path.

The first communication protocol may comprise a SIP protocol and the first communication endpoint may comprise a SIP endpoint. The second communication protocol may comprise a PBX based protocol and the second communication endpoint may comprise a PBX based endpoint. The PBX based protocol may comprise an IP based protocol.

The communication device may further comprise an integration module in communication with the first communication endpoint and the second communication endpoint, and the integration module may be enabled for triggering establishment of the second communication path. The integration module may be enabled to receive input data, the triggering occurring upon receipt of the input data.

Embodiments are described with reference to the following figures, in which:
Fig. 1 depicts a system for accessing communication features in a communication session between at least two communication devices, according to a non-limiting embodiment;
Fig. 2 depicts a communication device for accessing communication features, according to a non-limiting embodiment;
Figs. 3 to 6 depict systems for accessing communication features in a communication session between at least two communication devices, according to non-limiting embodiments;
Fig. 7 depicts a method for accessing communication features in a communication session between at least two communication devices, according to a non-limiting embodiment;
Figs. 8 and 9 depict signal diagrams for accessing communication features in a communication session between at least two communication devices, according to non-limiting embodiments; and
Fig. 10 depicts a system for accessing communication features in a communication session between at least two communication devices, according to a non-limiting embodiment.

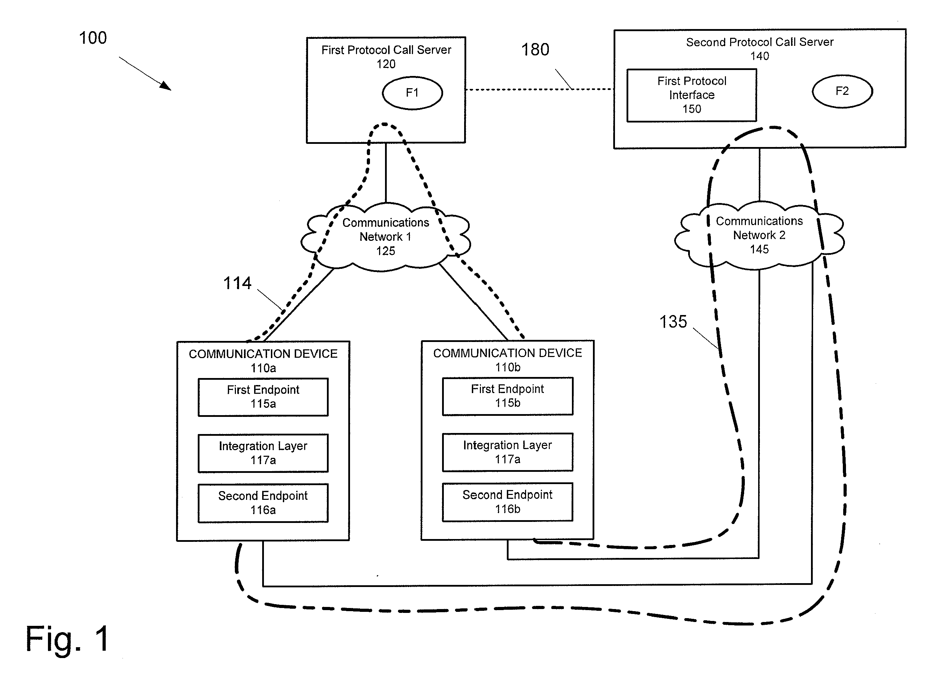

Figure 1 depicts a system 100 for accessing communication features in a communication session between at least two communication devices 110a and 110b (collectively communication devices 110 and generically a communication device 110). Figure 1 further depicts an application based view of each of the communication devices 110. The communication devices 110 are enabled to establish a first communication path 114 via a first communication protocol, the first communication protocol associated with a first set of communication features F1, as described below. The communication devices may be enabled to establish the first communication path 114 by way of a first protocol call server 120, each of the communication devices 110 enabled to communicate with the first protocol call server 120 via a first communications network 125. Hence, in general, each communication device 110 comprises a first communication endpoint 115 enabled to establish the first communication path 114 via the first protocol server 120, control communications on the first communication path 114 and allow a user of the communication device 110 access to the first set of communication features F1.

Each communication device 110 is further enabled to establish a second communication path 135 via a second communication protocol, said second communication protocol associated with a second set of communication features F2, as described below. The communication devices may be enabled to establish the second communication path 135 by way of a second protocol call server 140. In some embodiments, as depicted, each of the communication devices 110 enabled to communicate with the second protocol call server 140 via a second communications network 145. However, in other embodiments, each communication device 110 may be enabled to communicate with the second protocol call server 140 via the first communications network 125. In any event, each communication device 110 comprises a second communication endpoint 116 enabled to establish the second communication path 135 via the second protocol call server 140, control communications on the second communication path 135 and allow a user of the communication device 110 access to the second set of communication features F2.

Each communication device 110 further comprises an integration layer 117 enabled to trigger the establishing of the second communication path 135, as described below.

The first set of communication features F1 may be accessible via the first protocol call server 120 (as depicted), the first communication endpoint 115, a first protocol interface 150 in the second protocol server 140, or a combination. Similarly, the second set of communication features F2 may be accessible via the second protocol call server 140 (as depicted), the second communication endpoint 116, or a combination.

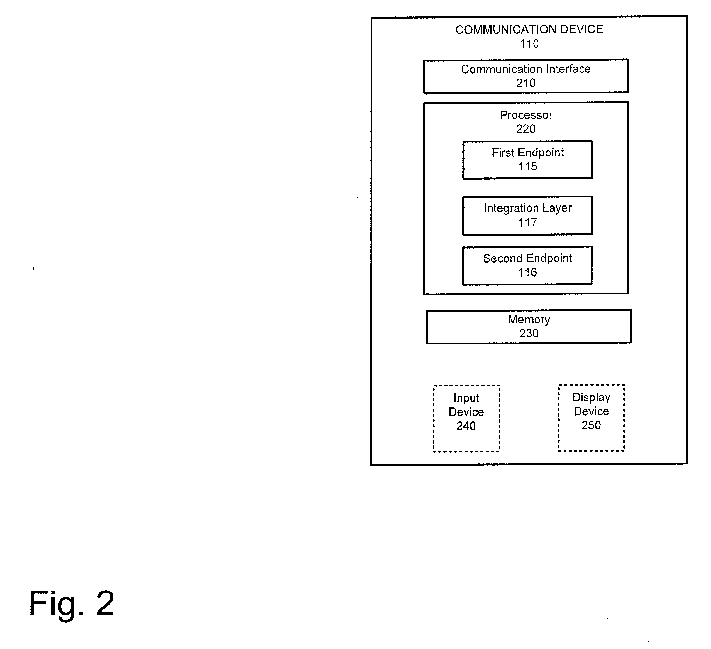

Turning to Figure 2, which depicts a hardware based view of a communication device 110, each communication device comprises a communications interface 210 enabled to communicate via the first communication network 125 and the second communications network 145 (if present), a processor 220 for processing data, and a memory 230, each of the communication interface 210, the processor 220 and the memory 230 in communication via a bus in the communication device 110. Hence, the first communication endpoint 115, the second communication endpoint 116 and the integration layer 117 may comprise applications stored in the memory 230 as data. The processor 220 may be enabled to retrieve the applications and process the applications to enable the functionality of the first communication endpoint 115, the second communication endpoint 116 and the integration layer 117 at the communication device 110.

In some embodiments, the communications device 110 further comprises an input device 240 for accepting input data from a user, and may include any desired combination of keyboard, touch screen, pointing device, scroll wheel, buttons, etc. In some embodiments, the communication device 110 further comprises a display device 250 for displaying data. Non-limiting embodiments of the display device 250 include CRTs and flat panel displays (e.g. plasma screens, liquid crystal displays and the like).

The communication device 110 may comprise a personal computer, a laptop computer, a mobile communications device, a cell phone, a PDA, etc., or a combination, communicating in a wired or wireless manner, as desired.

The first communications network 125 and the second communications network 145 may comprise any desired combination of wired or wireless networks suitable for carrying a voice based call/data including, but not limited to, the internet, a LAN, a WAN, the PSTN, a wireless network (including a cell network, GSM, CDMA, 1X, UMTS, WiFi, WiMax, or a combination, as desired). Hence, the communication interface 210 comprises any combination of hardware and software which enables communication via the first communications network 125 and the second communications network 145 (if present). In particular, the communication interface 210 is enabled to communicate via the first communications protocol and the second communications protocol.

Returning to Figure 1, the first protocol call server 120 comprises any suitable call server for enabling the communication devices 110 to communicate via the first communications protocol. The second protocol call server 140 comprises any suitable call server for enabling the communication devices 110 to communicate via the second communications protocol. In some embodiments, the first protocol call server 120 may be in communication with the second protocol 140, for example via a trunk 180 (e.g. which may be via the first communications network 125 and/or the second communications network 145), or a gateway. In these embodiments, the second protocol call server 140 may comprise a first protocol interface 150 for enabling the second protocol call server 140 to communicate via the first communications protocol.

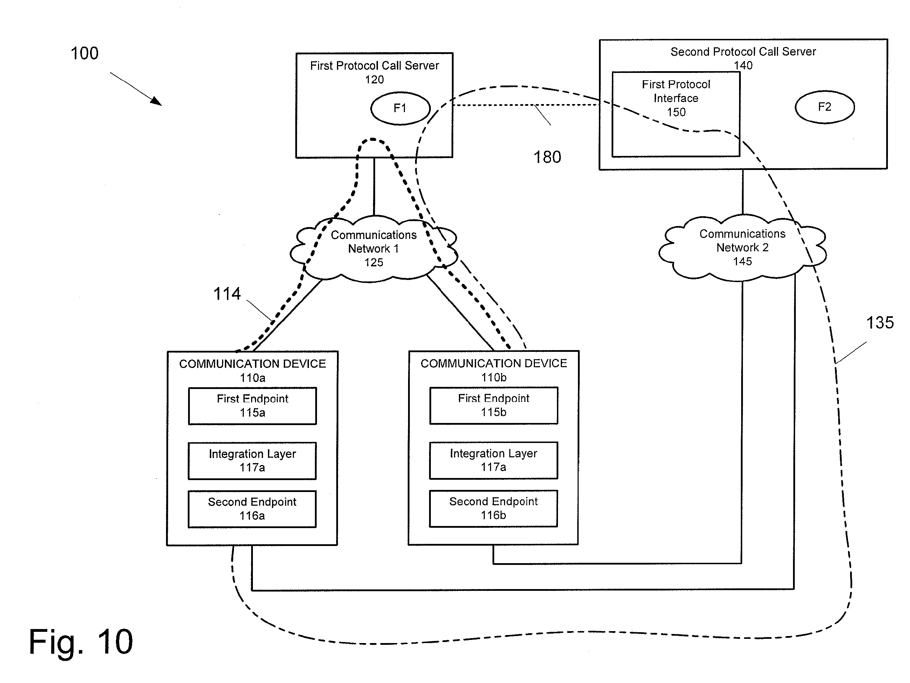

As depicted in Figure 10, which also depicts system 100, in some embodiments the second communication path 135 may be established via both the second communications network 145 and the first communications network 125, for example via the first protocol interface 150 of the second protocol server 140 and the first protocol server 120. In these embodiments, the second endpoint 116 of one of the communication devices 110 is communicating with the first endpoint 115 of the other communication device 110.

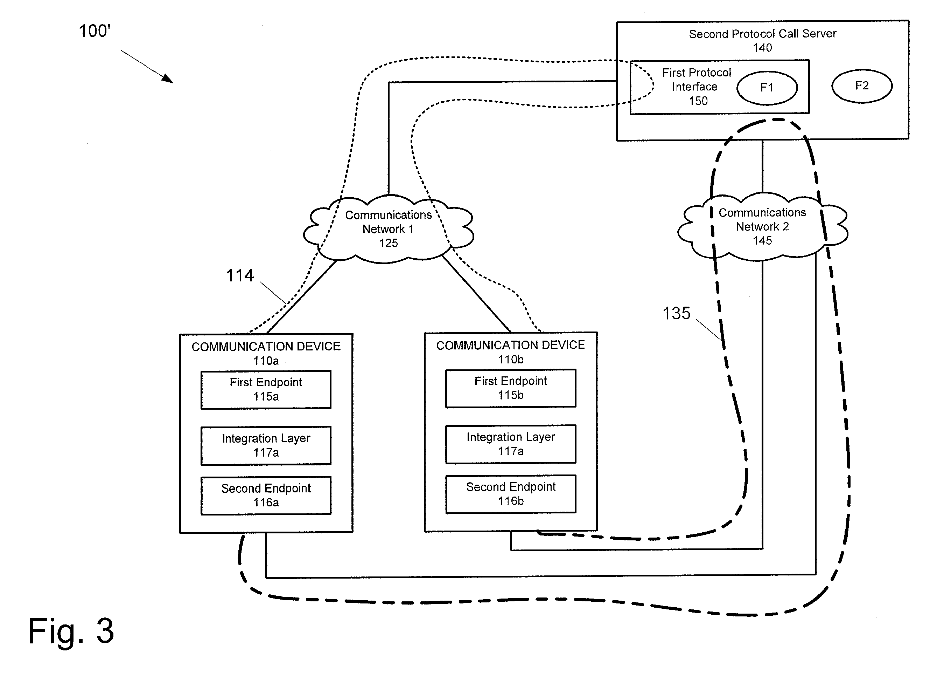

As depicted in Figure 3, which depicts a system 100' similar to system 100 with like elements depicted with like number, some embodiments, the first communications path 114 may be established via the first protocol interface 150. In other words, at least a portion of the functionality of the first protocol call server 120 is incorporated into the first protocol interface 150, and hence the first protocol call server 120 is not present in the system 100'. In some of these embodiments, a portion of the functionality of the first protocol call server 120 may also be incorporated into the second protocol server 140.

In any event, each communication device 110 is enabled for establishing the first communication path 114 between itself and at least one other communication device 110 via the first communication protocol, the first communication protocol associated with the first set of communication features F1. The first communication path 114 may be established via the first communication endpoints 115. Each communication device 110 is further enabled for establishing the second communication path 135 between itself and at least one other communication device 110 via the second communication protocol, the second communication protocol associated with a second set of communication features F2. The second communication path 135 may be established via the second communication endpoints 116. Hence, if a communication has been established via the first communication path 114, but access to the second set of communication features F2 is desired, the second communication path 135 may be established thereby giving the communication devices 110 access to the second set of communication features F2. In general, once the second communication path 135 has been established, the first communication path 114 is disconnected.

In some embodiments, the integration layer 117 may be enabled to accept input data from the input device 240, such that upon receiving input data indicative that access to the second set of communication features F2 is desired, the integration layer 117 triggers the first communications endpoint 115 and/or the second endpoint 116 to establish the second communication path 135. In a particular non-limiting embodiment, the integration layer 117 may be enabled to cause the display device 250 to display a representation of a portion of the integration layer 117 (e.g. in the form a of a graphic user interface (GUI)), thereby allowing a user to indicate their desire to gain access to the second set of communication features F2, by selecting an appropriate button, menu item, etc., from the GUI via the input device 240.

In a particular non-limiting embodiment, the first communication protocol comprises a SIP protocol, the first communication endpoint 115 comprises a SIP endpoint, and the first protocol call server 120 comprises a SIP call server, as known to one of skill in the art. In some of these embodiments, the SIP call server comprises an Open Architecture call server as known to one of skill in the art. Similarly, the first protocol interface 150, if present, comprises a SIP interface. In some of these embodiments, the second protocol call server 140 comprises a PBX enabled to administer at least one of PSTN based calls and IP (Internet Protocol) based calls. In some of these embodiments, the second communications endpoint 116 comprises a PBX based endpoint. A non-limiting example of a PBX based endpoint is an IP based phone application, however other PBX based endpoints may occur to a person of skill in the art. In some embodiments, the combination of the SIP endpoint, the integration layer 117 and the PBX based endpoint may be referred to as an Enhanced SIP Endpoint, as a user initially engaging the SIP endpoint may gain access to PBX based call features from what is initially a SIP based communication path, as described below.

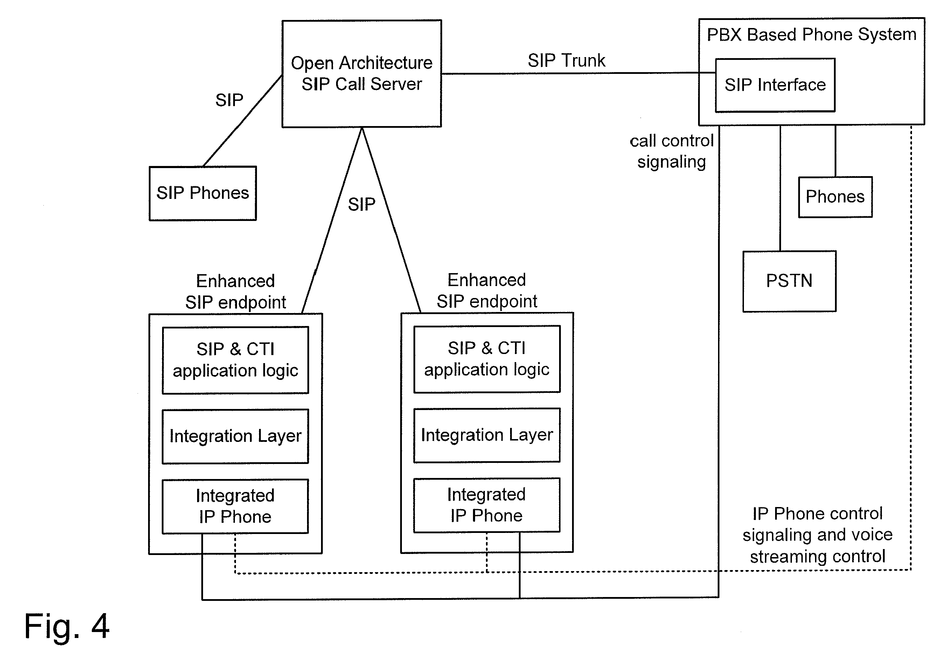

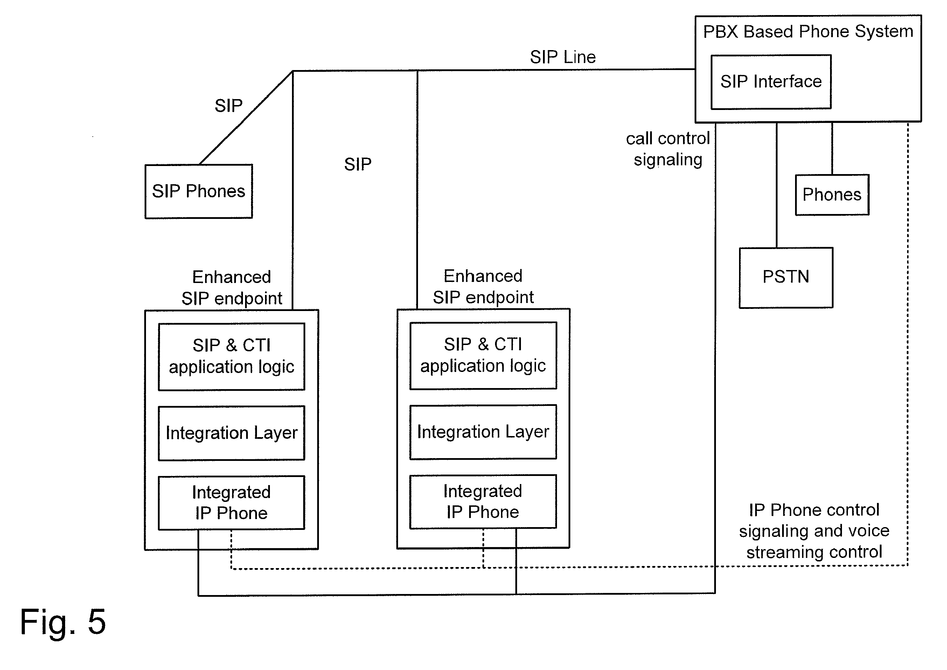

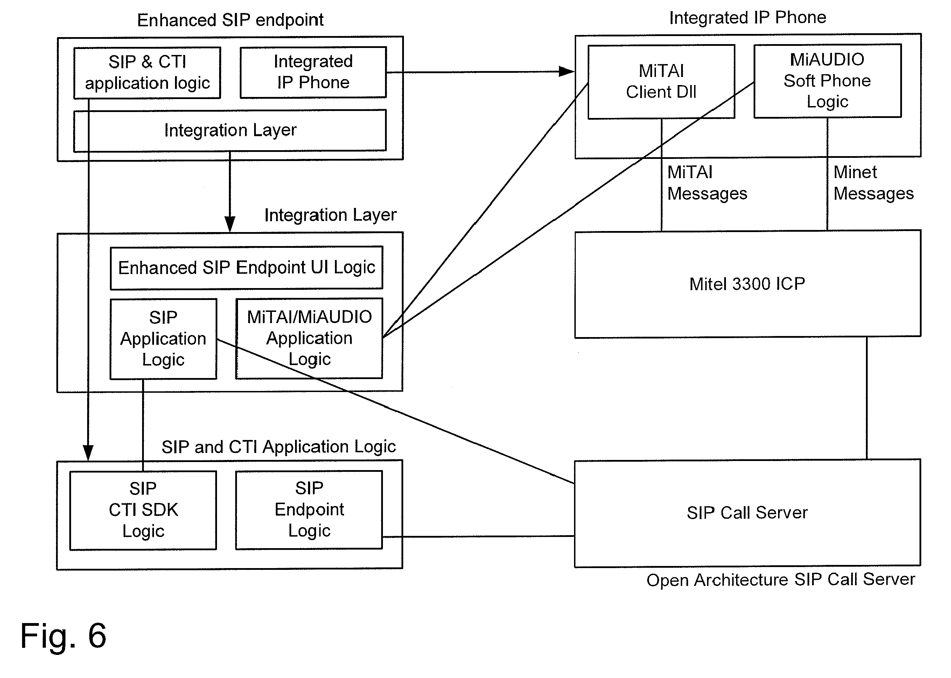

Details of the elements of a non-limiting SIP based embodiment of the systems 100 and 100' will now be described with reference to Figures 4 and 5. While a communication network is not depicted in Figures 4 and 5, it is understood that elements are communicating via a suitable communication network, similar to the first communication network 125 and/or the second communication network 145, where appropriate. Attention may also be directed, in the following discussion, to Figure 6 which depicts the software architecture of a particular non-limiting SIP based embodiment of the systems 100 and 100'.

The Open Architecture SIP Call Server (e.g. the first protocol call server 120) provides user authentication, phone registration, and SIP signalling control for both generic SIP endpoints and the Enhanced SIP Endpoint. The Open Architecture SIP Call Server fulfills the role of a SIP proxy. The Open Architecture SIP Call Server allows registered SIP endpoints to communicate using the SIP protocol. The Open Architecture SIP Call Server may also communicate with the PBX (second protocol call server 140) using SIP. Thus PBX based endpoints appear as SIP endpoints to the Open Architecture SIP Call Server and SIP endpoints appear as callable endpoints on a SIP trunk interface to the PBX. SIP endpoints call each other through the call server. SIP endpoints call PBX based endpoints through the Open Architecture SIP Call Server via the PBX. Similarly, PBX based endpoints can call SIP endpoints via the PBX and the Open Architecture SIP Call Server. A non-limiting example of an Open Architecture SIP Call Server is Microsoft Office Communications Server 2007 from Microsoft Corporation, One Microsoft Way Redmond, WA 98052-7329 USA; however other SIP servers are within the scope of the present specification. The Enhanced SIP Endpoint may place calls to the Open Architecture SIP Call Server when making a call using a SIP contact identifier (e.g. a SIP URI). The Enhanced SIP Endpoint may receive calls from the Open Architecture SIP Call Server when being called with a SIP contact identifier (e.g. a SIP URI). However the SIP protocol supports only a small number of call control features.

The PBX Based Phone System (PBX) (i.e. the second protocol call server 140) provides user authentication, phone registration, voice and data encryption, call control signalling, voice streaming, voice data encoding, and all other standard PBX functions including calls to and from locally connected phones and the PSTN, including PBX based endpoints. In some embodiments, the second communications endpoint 116 of the Enhanced SIP Endpoint is viewed as a regular IP Phone by the PBX. A SIP trunk (e.g. the trunk 180) interface with trunk feature functionality similar to standard trunks between PBXs is provided for communication with the Open Architecture SIP Call Server. A SIP Line interface (e.g. first protocol interface 150) with simple call feature functionality is provided for communication with SIP Endpoints. A unique Directory Number (DN) for each IP Phone (e.g. the second communications endpoint 116) associated with each Enhanced SIP Endpoint. Similarly, a unique SIP URI for each SIP and CTI Application Logic (e.g. the first communications endpoint 115) is associated with each Enhanced SIP Endpoint. The PBX has access to this information and is enabled to match a SIP contact identifier (e.g. SIP URI) to a Directory Number for placing calls to and from IP Phones and SIP Endpoints within the Enhanced SIP Endpoint. As in Figure 6, a non-limiting example of a PBX is Mitel's 3300 ICP from Mitel Network Corporation, 350 Legget Drive, Kanata, Ontario Canada K2K 2W7, however other PBXs are within the scope of the present specification.

The SIP Endpoint (i.e. the first communications endpoint 115) generally comprises SIP and CTI Application Logic (as depicted in Figure 6). This component generally comprises the generic SIP endpoint logic and the SIP Phone CTI SDKs (Software Development Kit). The role of this component is to enable the integration layer 117 to disable the normal SIP Endpoint UI, start up the SIP Endpoint Logic, and control and monitor the SIP Endpoint logic through CTI SDKs. This component behaves similar to a regular SIP Endpoint with CTI SDKs replacing the role of a SIP Endpoint user interface (UI). The integration layer 117 communicates with the SIP and CTI Application Logic to present a new user interface (e.g. the GUI described above) to the Enhanced SIP Endpoint User (i.e. user actions are controlled and monitored by the integration layer 117). However, if the integration layer 117 and the IP phone were removed from the Enhanced SIP Endpoint, the Enhanced SIP Endpoint could operate / function as a regular SIP endpoint. Examples of SIP and CTI Application Logic include, but are not limited to Microsoft Office Communicator 2007, with associated CTI SDKs (from Microsoft Corporation, One Microsoft Way Redmond, WA 98052-7329 USA), and IBM Lotus Sametime client with associated CTI SDKs (from IBM, 1 New Orchard Rd. Armonk, NY, 10504-1783).

The integrated IP Phone (i.e. the second communications endpoint 116) emulates an actual IP Phone to the PBX. As in Figure 6, in a non-limiting embodiment, the IP phone comprises a Mitel MiAUDIO softphone in Mitel's CTI SDK, from Mitel Network Corporation, 350 Legget Drive, Kanata, Ontario Canada K2K 2W7, however other IP phones are within the scope of the present specification. The IP Phone uses call control signalling, phone control signalling and voice stream signalling provided by the PBX. In embodiments where the PBX comprises Mitel 3300 ICP, the call control signalling may be effected via Mitel MiTAI, phone control signalling may be effected via Mitel Minet, and voice stream signalling may be effected via SRTP provided by Mitel MiRTP. The IP Phone registers with the PBX when the Enhanced SIP Endpoint logs in (i.e. when a user of the communication device 110 logs in). The IP Phone is associated with the IP address and port of the PBX and a Directory Number. The call control signalling enables the integration layer 117 to implement the additional call features (i.e. second set of call features) for the Enhanced SIP Endpoint.

The integration layer (i.e. integration layer 117) monitors and controls the behaviour of the IP phone and the SIP and CTI Application Logic, and uses the CTI SDKs provided by the IP phone and the SIP and CTI Application Logic. The integration layer provides the user interface enhancements needed to provide the additional call features to the Enhanced SIP Endpoint user. The integration layer communicates with the Open Architecture SIP Call Server, when present (e.g. as in Figure 4). Such communication may be by way of a call server CTI SDK. Such communication is used to set call state (busy, not busy) of the SIP endpoint. The integration layer is also enabled to communicate with the PBX. Such communication is by way of call control signalling protocol (e.g. Mitel MiTAI). Such communication is used to set call state of the integrated IP Phone. The Enhanced SIP Endpoint user is provided an option to use additional call features during a call. If the option is selected, a call connected using SIP will be transferred to the Integrated IP Phone. The call is transferred to allow the integration layer to use the call control signalling protocol (e.g. Mitel MiTAI) to implement additional call features for the Enhanced SIP Endpoint.

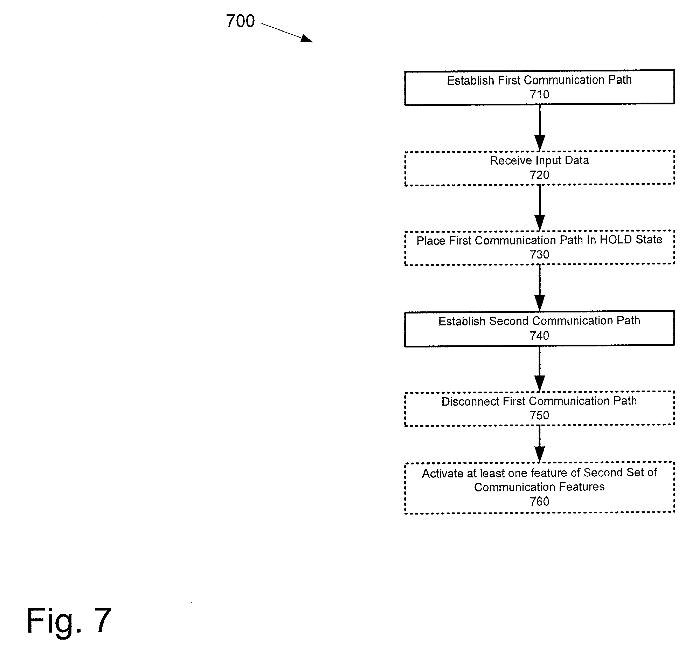

Attention is now directed to Figure 7, which depicts a method 700 of accessing communication features in a communication session between at least two communication devices. In order to assist in the explanation of the method 700, it will be assumed that the method 700 is performed using the system 100. Furthermore, the following discussion of the method 700 will lead to a further understanding of the system 100 and its various components. However, it is to be understood that the system 100 and/or the method 700 can be varied, and need not work exactly as discussed herein in conjunction with each other, and that such variations are within the scope of present embodiments. For example, the method 700 may be implemented in the system 100' and/or the particular non-limiting embodiments of Figures 4, 5 and 6.

At step 710, the first communication path 114 is established between the at least two communication devices 110 via a first communication protocol, the first communication protocol associated with the first set of communication features F1. Establishing the first communication path 114 may be triggered by at least one of the first communication endpoints 115, however establishing the first communication path may also be triggered by the integration layer 117. In general, the communication devices 110 have access to the first set of communication features F1 while communicating via the first communication path 114. In some embodiments, more than two communication devices 110 may be present along the first communication path 114, as in a conference call or three-way calling.

At step 720, in some embodiments, input data is received, for example from the GUI associated with the integration layer 117, described above. In general, the input data is indicative that access to the second set of communication features F2 is desired. For example, the first set of communication feature F1 may be limited and not provide features desired by at least one of the users of the at least two communication devices 110. Such features may be generally provided by the second set of communication features F2. A list of features available within the second set of communication features F2 may hence be presented to the user via the GUI. The user may then select one of the features available within the second set of communication features F2 via the input device 240.

In some embodiments, receipt of such input data at the integration layer 117, causes the integration layer 117 to trigger, at step 730 placing the first communication path 114 in a HOLD state. Alternatively, at least one of the first communication endpoints 115 may be muted, and the like.

Receipt of such input data at the integration layer 117, also causes the integration layer 117 to trigger, at step 740 establishing the second communication path 135 between at least the two communication devices 110 via the second communication protocol, the second communication protocol associated with the second set of communication features F2. Alternatively, the input device 240 may be used to indicate that the second communication path 135 is to be established, for example, by pressing a button on the input device 240, or using the input device to select a button or menu item within the GUI. Input data with such a selection may not strictly be associated with a particular feature available within the second set of communication features F2.

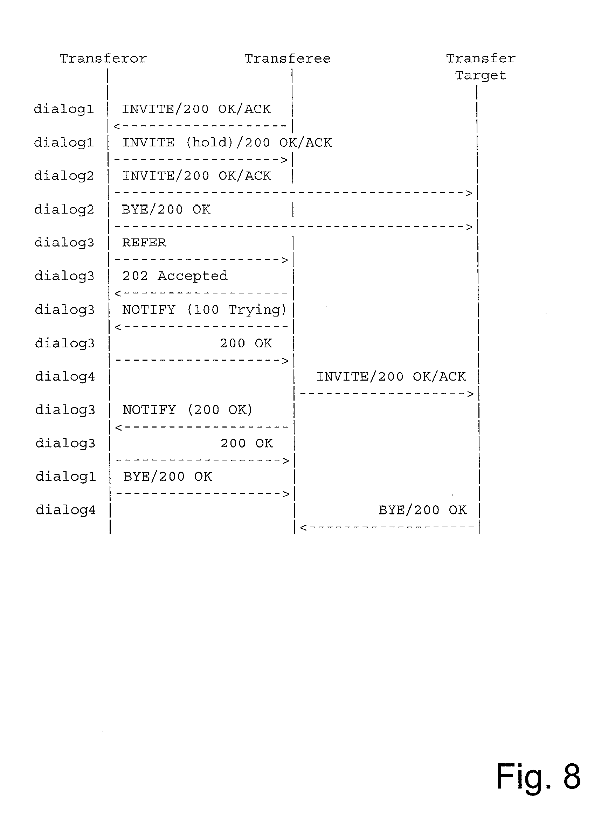

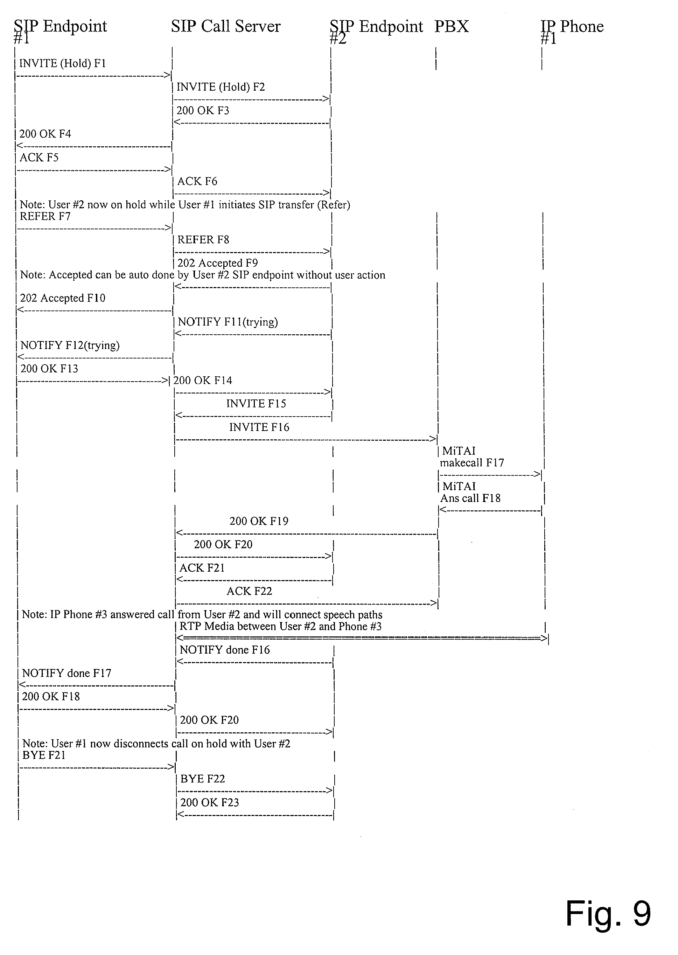

Further, triggering the establishment of the second communication path 135, as well as placing the first communication path 114 in a HOLD state, may occur via signalling originating at the first communication endpoint 115 and/or the second communication endpoint 116. Non-limiting example of signalling are provided in Figures 8 and 9.

In some embodiments, the second communication path is established between the second communication endpoints 116 of each of the at least two communication devices 110. However, in other embodiments, the second communication path 135 is established between the second communication endpoint 116 of the communication device 110 which triggered the establishment of the second communication path 135 and the first communication endpoint 115 of the other communication device 110, as in Figure 10 described above.

In any event, once the second communication path 135 is established, at least one of the at least two communication devices 110 are thereby given access to the second set of communication features F2. For example, if all of the at least two communication devices 110 are now communicating via the second communications endpoint 116, then all of the at least two communication devices 110 are thereby given access to the second set of communication features. However, if only a subset (e.g. one) of the at least two communication devices 110 are communicating via the second communications endpoint 116, and the other of the at least two communication devices 110 are communicating via the first communication endpoint 115, then only the subset of communication devices 110 which are communicating via the second communications endpoint 116 are thereby given access to the second set of communication features. However, the other of the at least two communication devices 110 which are communicating via the first communication endpoint 115 still have access to the first set of communication features F1.

In some embodiments, the first communication path 114 is then disconnected at step 750. Such a disconnection may be specifically triggered by the integration later 117 or alternatively be an inherent part of the signalling involved in establishing the second communication path 135. Alternatively, the first communication path 114 may be maintained in a hold state for later use.

In embodiments where the user selected one of the features available within the second set of communication features F2 via the input device 240, in association at step 720, the specific feature may then be activated at step 760. For example, if the user selected at least one of conference hold, split, swap, a key line appearance, a multi-line appearance and/or a pickup group, etc. (i.e. features not available in the first set of communication features F1), the chosen feature or features is then activated at step 760.

Turning now to Figure 8, a simplified call signalling of a SIP transfer using the "REFER" method is depicted, according to a non-limiting embodiment. It is assumed that call signalling is performed via the system 100, however it is understood that the call signalling may be performed via another system, such as the system 100', and/or the systems depicted in Figures 4, 5 and 6, or any other suitable system. In this embodiment, a communication session is first established on the first communication path 114 between the SIP endpoints (i.e. the first communication endpoints115) in the "Transferor" (e.g. the first communication device 110a) and the "Transferee" (e.g. the first communication endpoint 115b of the second communication device 110b). The Transferor then triggers the transfer of the communication session from the first communication path 114 to the second communication path 135 by communicating with the Transferee, using SIP protocol, to transfer the call to the "Transfer Target" (e.g. the second communication endpoint 116a). In some embodiments, the first communication endpoint 115b of the Transferor remains in the communication session, while in other embodiments, the communication session is also transferred to the second communication endpoint 116b.

At dialog 1, the Transferor invites the Transferee into a communication session via the first communication path 114, by sending a SIP invite (i.e. a SIP to SIP call is established). In some embodiments, at optional dialog 2, the Transferor verifies that the Transfer Target is available via the second communication path 135 via a SIP invite command. At dialog 3, the Transferor Refers the Transferee to the Transfer Target via a SIP Refer Command. At dialog 4, the Transferee invites the Transfer Target into the second communication path 135, completing the connection between the call to the second communication endpoint 116a and the first communication endpoint 115b. In some embodiments, further signalling occurs, either external or internal to the Transferor to further transfer the call to the second communications endpoint 116b.

Figure 9 depicts a particular non-limiting embodiment of call signalling of a SIP transfer using the refer method. It is assumed that call signalling is performed via the system 100, however it is understood that the call signalling may be performed via another system, such as the system 100', and/or the systems depicted in Figures 4, 5 and 6, or any other suitable system. It is assumed that a SIP call has been established between SIP Endpoints #1 and #2 associated with each of the communication devices 110 (i.e. the first communication endpoints 115a and 115b respectively), using methods known to persons of skill in the art. However, once an indication that additional call features are to be activated is received (as in step 720 of method 700, as described above), the integration layer 117 generates a SIP transfer on behalf of the user so that the existing call is transferred to the Integrated IP Phone (second communication endpoint 116a). To accomplish a SIP Transfer, SIP Endpoint #1 first puts SIP Endpoint #2 on Hold. SIP Endpoint #1 then initiates a Refer to connect SIP Endpoint #2 with IP Phone #1 (i.e. the second communication endpoint 116a). Thus the call is disconnected from the SIP and CTI Application Logic part of the Enhanced SIP Endpoint (at communication device 110a) and connected to the associated Integrated IP Phone #1 using call transfer. The call transfer is made to the IP Phone #1 without user involvement (i.e., no action required from either SIP endpoint user). The call to the IP Phone #1 allows the integration layer 117 to use call control signalling protocol (e.g. Mitel MiTAI) to implement additional call features for the Enhanced SIP Endpoint.

Hence the user of an Enhanced SIP Endpoint connected to a PBX Based Phone System (i.e. including an endpoint able to call PBX based phones, other SIP endpoints or to PSTN) is offered call control features usually only available with a PBX based phone on a PBX Based Phone system. Further, the user of an Enhanced SIP Endpoint connected to a Open Architecture SIP Call Server (i.e. endpoint able to call proprietary phones, other SIP endpoints or to PSTN) is offered call control features usually only available with a PBX Based phone on a PBX Based Phone system. In addition, the Enhanced SIP Endpoint has contact identifiers for both SIP and PBX protocols. When calling a SIP endpoint or being called by a SIP endpoint, a typical SIP contact identifier (e.g. SIP URI) can be used. When calling, or being called from, a PSTN endpoint or a PBX Based Phone System phone, a typical phone contact identifier (e.g. phone number) can be used. The integrated IP Phone in the Enhanced SIP Endpoint is known to a PBX Based Phone System and related endpoints. The SIP phone in the Enhanced SIP Endpoint is known to an Open Architecture SIP Call Server and related endpoints. Only one contact identifier is needed for the SIP endpoint and only one contact identifier is needed for the integrated Proprietary IP phone. The Enhanced SIP Endpoint enables a user to communicate with SIP endpoints, PBX Based Phone System endpoints and/or PSTN endpoints without having to change SIP endpoint configuration (e.g. switch between a CTI application with SIP phone configuration and a CTI application with integrated PBX IP phone configuration). Further, one user interface is provided for both the SIP endpoint and the integrated Proprietary IP Phone within the Enhanced SIP Endpoint. Advantageously, only existing SIP Endpoints are modified to implement such features. No changes/are required to the PBX Based Phone System, the Open Architecture SIP call server, or associated communication protocols.

In some non-limiting embodiments, at least some of the following alternatives may be incorporated into the system 100, the system 100', the system of Figure 4, the system of Figure 5 and/or the system of Figure 6:
- PBX Based Phone System can be configured with SIP Line side interface, SIP trunk Interface, and IP phones.
- Open Architecture SIP call server can be configured with SIP user account information for each SIP Endpoint.
- Enhanced SIP Endpoint may be configured through UI provided by integration layer 117 and /or user account repository / database.
- A User may log into an Enhanced SIP Endpoint with login name and password.
- Enhanced SIP Endpoint Integration Layer may use CTI SDKs to instruct the SIP and CTI Application Logic to register with the Open Architecture SIP Call Server or the PBX Based Phone System (when SIP Line side).
- Enhanced SIP Endpoint Integration Layer may use CTI SDKs to instruct the Integrated IP Phone to register with the PBX Based Phone System.
- During Enhanced SIP Endpoint registration, the Open Architecture SIP call server may authenticate the user against user account information.
- During Integrated IP Phone registration, the PBX Based Phone System may confirm phone directory number and phone registration code.
- The Open Architecture SIP call server, PBX Based Phone System and integration layer 117 may all have access to user account information. One non-limiting example of user account information is a user account repository / database (e.g. Microsoft Active Directory).
- The user account information may include: SIP URI, Tel URI, FQDN of PBX, IP address and port of PBX, FQDN of SIP call server, IP address and port of Open Architecture SIP call server, SIP endpoint Domain name, integrated Proprietary IP Phone Directory Number, user login name and password, user name, security certificates, and IP Phone registration code.
- PBX Based Phone System may authorize incoming call from Open Architecture SIP call server using user account information.
- User authorization may occur when Open Architecture SIP call server makes a connection to Proprietary Phone System when User logs in to Enhanced SIP Endpoint.
- A User of a UI of a SIP Endpoint may initiate a call by clicking a contact name and/or selecting make call. A Generic SIP Endpoint UI typically offers several different ways to initiate a call including: 1) using a local address book and phone icon, 2) selecting e-mail address (e-mail is then mapped to a SIP URI), 3) selecting a SIP URI. Such SIP endpoint functions are widely known and documented. Since the called party in this case is another SIP endpoint the contact identifier will be a SIP URI (e.g. sip:jack_smith@mitel.com).

In further non-limiting alternative embodiments, the following call scenarios may occur.

A User #1 uses UI of an Enhanced SIP Endpoint #1 to initiate a call by entering or selecting a contact identifier and selecting make call to User #2. Since called party in this case is a PBX Based Phone System endpoint the contact identifier is a Directory Number. The integration layer 117 detects that User #1 is making a call to a PBX Based Phone System endpoint based on the contact identifier. Instead of sending SIP INVITE request to the Open Architecture SIP call server, the integration layer 117 instructs the Integrated IP Phone to send a make call request (using the Integrated IP Phone SDK, e.g. using MiTAI) to the PBX Based Phone System.

The PBX Based Phone System processes the make call request and finds the PBX Based Phone System endpoint. The called PBX Based Phone System endpoint receives the call and answers. After answer, the PBX Based Phone System sends answer message back to the Integrated IP Phone. The integration layer 117 in Enhanced SIP endpoint #1 detects that the ongoing call has been answered and updates the Enhanced SIP Endpoint UI appropriately. When the integration layer 117 receives an answer indication, the integration layer can change the call state of the SIP and CTI Application Logic to busy. To set the SIP and CTI Application Logic to busy, the integration layer 117 can communicate directly to the Open Architecture SIP call server using a CTI SDK or by instructing the SIP and CTI Application Logic to inform the Open Architecture SIP call server. The integration layer 117 controls and monitors the Integrated IP Phone and SIP & CTI Application Logic using SDK APIs.

Now consider that Enhanced SIP Endpoint #1 has the additional call feature option enabled. The Integrated IP Phone may be configured to have a multi-line appearance (i.e. Integrated IP Phone has two line appearances of its own DN). With Multi-line appearance, the integration layer 117 can change the Enhanced SIP Endpoint #1 UI to indicate the SIP endpoint is available to receive another call. Enhanced SIP Endpoint #1 it can now accept a second call as discussed below.

Consider now that a User #3 calls User #1. The integration layer 117 detects the incoming call from another SIP endpoint. The integration layer 117 generates a redirect response (as known to one of skill in the art) to the Open Architecture SIP call server so that the incoming call is sent to a SIP URI with the URI format (e.g. Sip:+16135922000@mitel.com;ext = 2000). This means the PBX Based Phone System gets a redirect call for User #1 (i.e. the call from User #3) and sends the call to multi-line appearance. The integration layer 117 monitors the Integrated IP Phone multi-line appearance and can present the second incoming call to User #1. Thus User #1 can answer the second incoming call from User #3 and put the existing call with User #2 on hold. User #1 gets UI indications about the second call progress. User #1 will get connected and start conversation with User #3.

To retrieve the held call to User #2, User #1 will be presented with call indications for two calls by the integration layer 117 in Enhanced SIP Endpoint #1 UI. When User #1 hangs up call with User #3, first call with User #2 is reconnected.

Thus the integration layer 117 can answer a second incoming call on the multi-line appearance. The second calling party communicates with User #1 on the multi-line appearance of the integrated soft phone.

A scenario where the Enhanced SIP Endpoint receives a call from the PBX Based Phone System is now described. This scenario indicates how User #1 uses integrated IP Phone to receive a call from a PBX Based Phone System endpoint

When a PBX Based Phone System endpoint wants to call Enhanced SIP endpoint #1 using a DN, a call indication is presented to the associated Integrated IP Phone. The PBX Based Phone System locates the Integrated IP Phone using dialled DN.

The integration layer 117 detects the incoming call by monitoring the Integrated IP Phone. The integration layer provides User #1 with indication of the incoming call. The integration layer 117 controls and monitors the Integrated IP Phone. Once User #1 answers the call, the integration layer 117 instructs the Integrated IP Phone to answer the incoming call. If User #1 rejects the incoming call or redirects the call to another endpoint, Enhanced SIP Endpoint #1 would no longer be involved in the call. The integration layer 117 would update the SIP endpoint UI with appropriate information and can alert the Open Architecture SIP call server to the call state of the SIP endpoint.

A scenario where the Enhanced SIP Endpoint #1 has the additional call features option enabled and User #1 is in a call with User #2 using the Integrated IP Phone is now described. Next User #1 wants to also call User #3. The integration layer 117 reacts to user input on the UI. The integration layer 117 generates a consultation call so that the existing call is put on hold and a new call is initiated. Thus the call from User #1 to User #2 is put on hold and User #3 is called. User #3 sees this as a new call. User #1 gets UI indications about the second call progress. Once User #3 answers, User #1 will get connected and start conversation with User #3. To retrieve the held call to User #2, User #1 will be presented with call retrieve option by the integration layer 117 in Enhanced SIP Endpoint #1 UI. When User #1 retrieves the held call to User #2, second call to User #3 is disconnected.

Referring back to Figure 6, an overview of integration layer 117 using the Integrated IP Phone to communicate with the PBX Based Phone System is described in further detail, according to a particular non-limiting embodiment. The integration layer 117 in the Enhanced SIP Endpoint uses Mitel MiTAI to exchange call control requests and events with the PBX Based Phone System (i.e. Mitel 3300 ICP). The integration layer includes MiTAI application logic. The MiTAI Application logic uses the MiTAI Client DLL to open an IP socket connection to the 3300 ICP to allow an exchange of messages (i.e. SXOpenPBX is used to create socket connection). After the IP socket connection is open, the MiTAI application logic uses the MiTAI Client DLL to create a MiTAI monitor on the Integrated IP Phone (i.e. MiAUDIO soft Phone). The MiAUDIO soft phone registers with the 3300 ICP using Minet protocol. The 3300 ICP views the MiAUDIO soft phone in the same way as another regular Mitel IP Phone.

The MiTAI application Logic uses the MiTAI monitor to control and monitor the MiAUDIO soft phone. The following message flow indicates the MiTAI messages needed to make, answer and clear a call. Each Monitor on an IP Phone making a call receives four basic MiTAI call events and each monitor on the receiving IP Phone receives three MiTAI call events as noted below. Each MiTAI message maps to one IP Packet being sent and from the 3300 ICP. Depending on the types of monitors used and the scenario being executed different MiTAI requests and events are generated. This would be the case where the MiTAI Application logic uses the MiTAI Client DLL to perform additional call features.

In this example IP Phone A calls IP Phone B:

| | | IP Phone A MiTAI Monitor | IP Phone B MiTAI Monitor |
|---|---|---|---|
| Action | Generated MiTAI Requests | Generated MiTAI Events | Generated MiTAI Events |
| IP Phone A makes a call to IP Phone B | SXMakeCall (with DN of IP Phone B) | SXCallOriginated Event | |
| | | SXCallDelivered Event | SXCallReceived Event |
| IP Phone B answers call from IP Phone A | SXAnswerCall () | SXCallEstablished Event | SXCallEstablished Event |
| | | | |
| IP Phone A clears call to IP Phone B | SXClearCall () | SXCallCleared Event | SXCallCleared Event |

A non-limiting embodiment of a GUI/UI associated with the integration layer 117/Enhanced SIP endpoint is now described. Such a GUI may be programmed by a person of skill in the art of programming GUI's. In some embodiments, the GUI would present text, keypad, arrow keys, display window, controls etc. to a user. In addition the GUI would enable a user to select an "additional call features option". When a user activates/selects this option, the Enhanced SIP Endpoint UI would present the user with "additional" call control features, and specifically features available in the second set of communication features F2, that may not be available in the first set of communication features F1.

The "additional call features option" in the UI may be presented to the user following log in. This option may be available to the user whether the Enhanced SIP endpoint was in a call or not in a call. The additional call control features presented to the user after selection of the "additional call features option" may include:
- Multi-line appearance
- Key-line appearance
- Call park and Call pick-up
- Conference call swap, hold and retrieve
- Hotdesk User Login
- ACD login
- ACD Hotdesk User Login
- Ring Groups

Those skilled in the art will appreciate that in some embodiments, the functionality of the first communication endpoint 115, the second communication endpoint 116, and the integration later 117 may be implemented using pre-programmed hardware or firmware elements (e.g., application specific integrated circuits (ASICs), electrically erasable programmable read-only memories (EEPROMs), etc.), or other related components. (This is true) In other embodiments, the functionality of the first communication endpoint 115, the second communication endpoint 116, and the integration later 117 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of accessing communication features in a communication session between at least two communication devices, comprising
establishing a first communication path between said at least two communication devices via a first communication protocol, said first communication protocol associated with a first set of communication features; and
establishing a second communication path between said at least two communication devices via a second communication protocol, said second communication protocol associated with a second set of communication features thereby giving at least one of said at least two communication devices access to said second set of communication features.

2. The method of claim 1, further comprising disconnecting said first communication path once said second communication path is established.

3. The method of claim 1 or claim 2, wherein said first communication path is placed in a hold state prior to establishing said second communication path.

4. The method of any preceding claim, wherein said first communication protocol comprises a SIP protocol.

5. The method of any preceding claim, wherein said second communication protocol comprises a PBX based protocol, optionally an IP based protocol.

6. The method of any preceding claim, wherein each of said communication devices comprises a SIP endpoint and a PBX based endpoint, and optionally wherein said establishing said first communication path occurs via at least one of said SIP endpoints and said establishing said second communication path occurs via at least one of said PBX based endpoints.

7. The method of any preceding claim, wherein said communication device further comprises an integration module, said integration module is enabled for triggering said establishing said second communication path, and optionally wherein said integration module is enabled to receive input data indicative that access to said second set of communication features is desired, said triggering occurring upon receipt of said input data.

8. The method of any preceding claim, wherein said second set of communication features is larger than said first set of communication features.

9. The method of any preceding claim, wherein each of said at least two communication devices are given access to said second set of communication features upon said establishing said second communication path

10. A communication device comprising
a first communication endpoint enabled for establishing a first communication path between the communication device and at least one other communication device via a first communication protocol, said first communication protocol associated with a first set of communication features; and
a second communication endpoint enabled for establishing a second communication path between the communication device and said at least one other communication device via a second communication protocol, said second communication protocol associated with a second set of communication features thereby giving at least the communication device access to said second set of communication features.

11. The communication device of claim 10, wherein said first communication endpoint is enabled for disconnecting said first communication path once said second communication path is established.

12. The communication device of claim 10 or claim 11, wherein said first communication path is placed in a hold state prior to establishing said second communication path.

13. The communication device of any of claims 10 to 12, wherein said first communication protocol comprises a SIP protocol and said first communication endpoint comprises a SIP endpoint.

14. The communication device of any of claims 10 to 13, wherein said second communication protocol comprises a PBX based protocol and said second communication endpoint comprises a PBX based endpoint, optionally an IP based protocol.

15. The communication device of any of claims 10 to 14, wherein said communication device further comprises an integration module in communication with said first communication endpoint and said second communication endpoint and said integration module is enabled for triggering said establishing said second communication path, and optionally wherein said integration module is further enabled to receive input data, said triggering occurring upon receipt of said input data.
